# EUROPEAN PATENT SPECIFICATION

(11) **EP 2 998 838 B1**
(45) Date of publication and mention of the grant of the patent: **02.10.2019**
(21) Application number: 15182073.5
(22) Date of filing: 21.08.2015
(51) Int. Cl.: G06F 3/042, G06F 3/0488, G06F 3/0354, G06F 3/01, G06F 3/041, G06F 3/044, G06F 3/0481

(54) **DISPLAY APPARATUS AND METHOD FOR CONTROLLING THE SAME**
ANZEIGEVORRICHTUNG UND VERFAHREN ZUR STEUERUNG DAVON
APPAREIL D'AFFICHAGE ET PROCEDE DE COMMANDE CORRESPONDANT

(30) Priority: 19.09.2014 KR 20140124831
(43) Date of publication of application: 23.03.2016
(73) Proprietor: Samsung Electronics Co., Ltd., Gyeonggi-do 16677 (KR)
(72) Inventor: PARK, Jeong-hyun, Gyeonggi-do (KR); PARK, Chun-woo, Gyeonggi-do (KR); AN, Jin-sung, Gyeonggi-do, (KR); CHOI, Kyoung-oh, Seoul (KR); CHOI, Hyun-mook, Seoul (KR); HAN, Young-ran, Gyeonggi-do (KR)
(74) Representative: Taor, Simon Edward William

(56) References cited:
- EP-A1- 2 693 303
- EP-A2- 2 806 347
- WO-A2-2010/029491
- US-A1- 2007 182 725
- US-A1- 2010 090 988
- US-A1- 2013 113 762

## Description

Apparatuses and methods consistent with exemplary embodiments relate to a display apparatus and a method for controlling the same, and more particularly, to a display apparatus capable of controlling various functions of the display apparatus using a digital pen, and a method for controlling the same.

Recently, a touch interface has been provided in order to provide an intuitive user interface environment. Particularly, the touch interfaces using various methods such as a touch interface using a digital pen as well as a touch interface using a hand of a user have been provided.

Meanwhile, in order to execute or terminate a program in a touch interface according to the related art, an icon corresponding to the program to be executed should be continuously touched or a termination icon should be touched. That is, in order to execute or terminate the program, the icon corresponding to the corresponding program should be touched. However, in a display apparatus having a large screen, when the icon is positioned far away from the user, the user may have difficulties finding and touching the icon.

In addition, in a case in which a multi-touch is supported, a displayed image may be expanded, reduced, or rotated by using two fingers or two digital pens. Particularly, the touch interface using the digital pen had inconvenience that the user should hold and manipulate the two digital pens, respectively.

EP 2,693,303 A1 relates to a stylus having a plurality of infrared transmitters emitting infrared beams, and a corresponding display having a plurality of infrared receivers to determine stylus gesture information.

WO 2010/029491 A2 relates to a method of controlling a display apparatus using touch gestures which can be input using a plurality of fingers or styluses.

Exemplary embodiments of the disclosure may overcome the above disadvantages and other disadvantages not described above. Also, the exemplary embodiments of the disclosure may not be required to overcome the disadvantages described above, and the exemplary embodiments may not overcome any of the problems described above.

One or more exemplary embodiments provide a display apparatus capable of performing various functions of the display apparatus through a touch gesture using one digital pen, and a method for controlling the same.

According to an aspect of an exemplary embodiment, there is provided a method for controlling a display apparatus according to claim 1.

According to an aspect of another exemplary embodiment, there is provided a display apparatus according to claim 8.

According to various exemplary embodiments as described above, the user may more intuitively and conveniently perform various functions of the display apparatus through various touch gestures using one digital pen.

The above and/or other aspects of the present invention will be more apparent by describing exemplary embodiments with reference to the accompanying drawings, in which:
FIG. 1 is a diagram showing a touch system according to an exemplary embodiment;
FIG. 2 is a block diagram schematically showing a configuration of a display apparatus according to an exemplary embodiment;
FIG. 3 is a block diagram showing in detail a configuration of a display apparatus according to an exemplary embodiment;
FIGS. 4A to 4C are diagrams illustrating a method for performing a coordinate calculating mode or a touch gesture mode using a digital pen according to an exemplary embodiment;
FIGS. 5A to 10C are diagrams showing various examples of controlling the function of the display apparatus using the digital pen during the touch gesture mode according to exemplary embodiments;
FIGS. 11A to 11C are diagrams illustrating a method for setting a touch gesture region according to exemplary embodiments;
FIG. 12 is a diagram showing a user interface (UI) for turning on/off the touch gesture mode according to an exemplary embodiment;
FIG. 13 is a diagram illustrating a method for controlling a display apparatus according to an exemplary embodiment; and
FIGS. 14 and 15 are diagrams illustrating the display apparatuses providing the touch gesture mode and the coordinate calculating mode using a plurality of touch sensing modes according to an exemplary embodiment.

The exemplary embodiments may be diversely modified. Accordingly, specific exemplary embodiments are illustrated in the drawings and are described in detail in the detailed description. However, it is to be understood that the inventive concept is not limited to a specific exemplary embodiment, but includes all modifications, equivalents, and substitutions which fall within the scope of the appended claims. Also, well-known functions or constructions are not described in detail since they would obscure the invention with unnecessary detail.

The terms "first", "second",...... may be used to describe diverse components, but the components are not limited by the terms. The terms are only used to distinguish one component from the others.

The terms used in the present application are only used to describe the exemplary embodiments, but are not intended to limit the scope of the inventive concept. Singular forms used herein are intended to include plural forms unless explicitly indicated otherwise. In the present application, the terms "include" and "consist of' designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

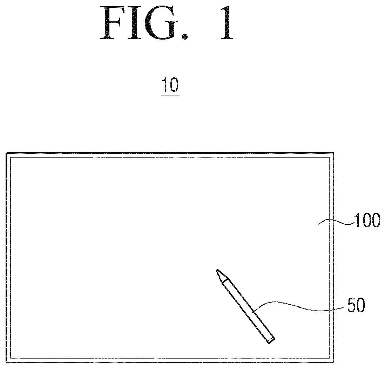

Hereinafter, various exemplary embodiments will be described with reference to the accompanying drawings. FIG. 1 is a diagram showing a touch system 10 according to an exemplary embodiment. The touch system 10 includes a display apparatus 100 and a digital pen 50. In the exemplary embodiment, the display apparatus 100 may be implemented as an electronic bulletin board, but embodiments of the invention are not limited thereto. For example, the display apparatus 100 may be implemented as various display apparatuses such as a smart TV, a desktop PC, a notebook PC, a tablet PC, a kiosk, and the like.

The display apparatus 100 performs various functions in response to a touch input using the digital pen 50. For example, the display apparatus 100 may provide different operation modes depending on the number of touch points sensed by the digital pen 50.

Specifically, in a case in which the number of touch points sensed by the digital pen 50 is one, the display apparatus 100 switches a mode of the display apparatus 100 to a coordinate calculating mode, so as to obtain a coordinate value of the point sensed by the digital pen 50 and display an object at the obtained coordinate value. In addition, in a case in which the number of touch points sensed by the digital pen 50 is greater than one (e.g., two or more), the display apparatus 100 switches the mode of the display apparatus 100 to a touch gesture mode, so as to sense a touch gesture using the digital pen 50 and perform various functions of the display apparatus 100 depending on the sensed touch gesture.

As described above, different operation modes are provided depending on the number of touch points sensed by the digital pen 50, such that a user may more institutively and conveniently perform various functions of the display apparatus 100 using the digital pen 50.

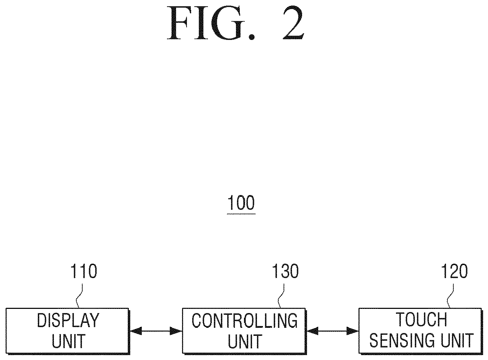

Hereinafter, the display apparatus 100 will be described in more detail with reference to FIGS. 2 to 12. FIG. 2 is a block diagram schematically showing a configuration of the display apparatus 100 according to an exemplary embodiment. As shown in FIG. 1, the display apparatus 100 includes a display unit (e.g., a display) 110, a touch sensing unit (e.g., a touch sensor) 120, and a controlling unit (e.g., a controller)130.

The display unit 110 displays image contents obtained from various sources or displays a user interface (UI) for controlling the display apparatus 100. For example, the display unit 110 may expand, reduce, or rotate the displayed image according to the touch gesture input during the touch gesture mode.

The touch sensing unit 120 senses the digital pen 50. For example, the touch sensing unit 120 may sense the digital pen 50 using an infrared (IR) mode. In addition, the touch sensing unit 120 may sense at least one or more of a plurality of IR sensing elements included in the digital pen 50. Meanwhile, the touch sensing unit 120 may be implemented as a touch screen, together with the display unit 110.

The controlling unit 130 may control an overall operation of the display apparatus 100. For example, when the number of touch points sensed by the digital pen 50 is the plural number (i.e., greater than one), the controlling unit 130 switches the mode of the display apparatus 100 to the touch gesture mode. In addition, when the touch gesture using the digital pen 50 is sensed by the touch sensing unit 120 during the touch gesture mode, the controlling unit 130 controls the display apparatus 100 according to the sensed touch gesture.

Specifically, when the digital pen 50 is sensed by touch sensing unit 120, the controlling unit 130 may determine the number of touch points sensed by the digital pen 50. Meanwhile, the digital pen 50 may include the plurality of IR sensing elements. For example, the digital pen 50 may include a first IR light emitting element in a pen nib part (e.g., a pointed part), and a second IR light emitting element and a third IR light emitting element in a pen body part.

For example, when the digital pen 50 touches the display unit 110 in a state in which the digital pen 50 stands vertically or slanted, the controlling unit 130 may determine that the touch point sensed by the first IR light emitting element of the digital pen 50 is one. In the case of the touch point sensed by the digital pen 50, the controlling unit 130 may switch the mode of the display apparatus 100 to the coordinate calculating mode and calculate a coordinate value of the touch point where the digital pen 50 stands. In addition, the controlling unit 130 may control the display unit 110 to display the object at the calculated touch point. Alternatively, the controlling unit 130 may select a display item displayed at the touch point.

For example, when the digital pen 50 touches the display unit 110 in a state in which the digital pen 50 lies on the display unit 110, the controlling unit 130 may determine that the touch points sensed by the second IR light emitting element and the third IR light emitting element of the digital pen 50 is two. In addition, the controlling unit 130 may calculate a distance between the two touch points. When the calculated distance between the two touch points is equal to a preset value (e.g., a distance between the second IR light emitting element and the third IR light emitting element), the controlling unit 130 may switch the mode of the display apparatus 100 to the touch gesture mode.

While the touch gesture mode is maintained, the controlling unit 130 may control various functions of the display apparatus 100 according to the touch gesture using the digital pen 50.

For example, when a touch gesture in which the digital pen 50 is moved in a preset direction is sensed, the controlling unit 130 may control the display unit 110 to expand or reduce the displayed image depending on the moved direction. As another example, when a touch gesture in which rotation of the digital pen 50 is sensed, the controlling unit 130 may control the display unit 110 to rotate an image depending on a rotation direction and a rotation angle of the touch gesture by the digital pen. As another example, when a touch gesture in which the digital pen 50 is moved in a preset direction and is then returned to an original position is sensed, the controlling unit 130 may perform a specific program, and when a touch gesture in which the digital pen 50 is moved in the preset direction and is then returned to the original position during an execution of the specific program is again sensed, the controlling unit 130 may terminate the specific program.

Meanwhile, the controlling unit 130 may set a touch gesture region for receiving the touch gesture according to a user instruction. In the exemplary embodiment, the touch gesture region is a region for receiving the touch gesture using the digital pen, and for example, when the mode of the display apparatus is switched to the touch gesture mode, the controlling unit 130 may control the display unit 110 to display the touch gesture region differently from other regions.

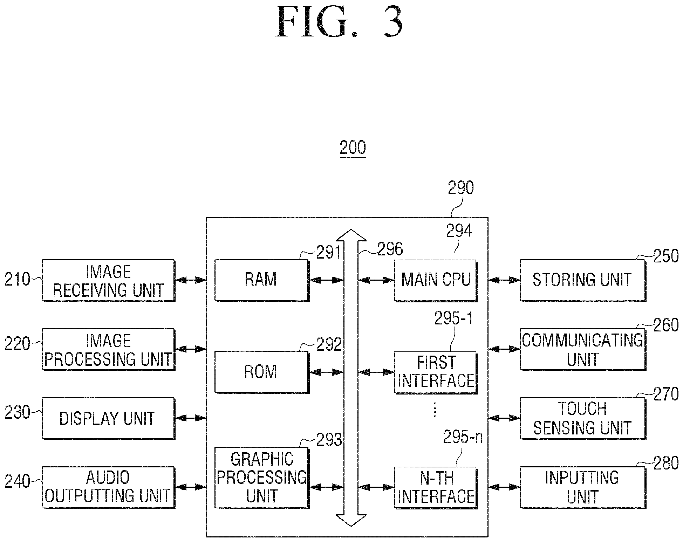

FIG. 3 is a block diagram showing in detail a configuration of a display apparatus 200 according to an exemplary embodiment. As shown in FIG. 3, the display apparatus 200 includes an image receiving unit (e.g., an image receiver) 210, an image processing unit (e.g., an image processor) 220, a display unit (e.g., a display) 230, an audio outputting unit (e.g., an audio outputter) 240, a storing unit (e.g., a memory) 250, a communicating unit (e.g., a communicator) 260, a touch sensing unit (e.g., a touch sensor) 270, an inputting unit (e.g., an inputter) 280, and a controlling unit (e.g., a controller) 290.

The image receiving unit 210 receives various image contents from the outside. For example, the image receiving unit 210 may receive broadcasting contents from an external broadcasting station, receive image contents from external devices (e.g., a DVD player, etc.),or receive VOD contents from an external server.

The image processing unit 220 is a component performing an image processing for image data obtained from the image receiving unit 210. The image processing unit 220 may perform various image processes such as decoding, scaling, noise filtering, frame rate converting, resolution converting, and the like for the image data.

The display unit 230 displays at least one of the image contents received from the image receiving unit 210 and various UIs processed by a graphic processing unit 293. For example, the display unit 230 may display the image contents having the image processed (e.g., expanded, reduced, or rotated) by the image processing unit 220 according to the touch gesture input by the digital pen 50. In addition, the display unit 230 may display the UI for turning on/off the touch gesture mode.

The audio outputting unit 240 is a component outputting a variety of alarm sounds or voice messages as well as a variety of audio data processed by an audio processing unit (not shown).

The storing unit 250 stores various modules for driving the display apparatus 200. For example, the storing unit 250 may store software including a base module, a sensing module, a communication module, a presentation module, a web browser module, and a service module. In this case, the base module is a basic module processing signals transferred from the respective hardware included in the display apparatus 200 and transferring the signals to a high layer module. The sensing module, which is a module collecting information from a variety of sensors and analyzing and managing the collected information, may also include a face recognizing module, a voice recognizing module, a motion recognizing module, an NFC recognizing module, and the like. The presentation module, which is a module for configuring a display screen, may include a multimedia module for reproducing and outputting multimedia contents and an UI rendering module performing an UI and graphic processing. The communicating module is a module for performing communications with the outside. The web browser module means a module performing a web browsing so as to access a web server. The service module is a module including a variety of applications for providing various services.

As described above, the storing unit 250 may include various program modules, but some of various program modules may be omitted, modified or added depending on a kind and feature of display apparatus 200. For example, when the display apparatus 200 described above is implemented as the tablet PC, the base module may further include a location determining module for determining a GPS based location, and the sensing module may further include a sensing module for sensing a motion of the user.

The communicating unit 260 is a component performing communications with various types of external devices according to various types of communications methods. The communicating unit 260 may include various communicating chips such as a WiFi chip, a Bluetooth chip, a near field communication (NFC) chip, a wireless communication chip, and the like. In this case, the WiFi chip, the Bluetooth chip, and the NFC chip perform communications in a WiFi method, a Bluetooth method, and an NFC method, respectively. Among these, the NFC chip means a chip which is operated in the NFC method using a frequency band of 13.56MHz of various RF-ID frequency bands such as 135kHz, 13.56MHz, 433MHz, 860∼960MHz, 2.45GHz, and the like. In a case in which the WiFi chip or the Bluetooth chip is used, a variety of access information such as SSID, a session key, and the like may be first transmitted and received, a communication access may be performed using the variety of access information, and a variety of information may be then transmitted and received. The wireless communication chip means a chip performing communications according to various communications standards such as IEEE, ZigBee, 3rd generation (3G), 3rd generation partnership project (3GPP), Long Term Evolution (LTE), and the like.

According to an exemplary embodiment, when the digital pen 50 calculates the touch point, the communicating unit 260 may communicate with the digital pen 50 so as to receive information on the point touched by the digital pen 50, from the digital pen 50.

The touch sensing unit 270 may sense a touch of the digital pen 50. Particularly, the touch sensing unit 270 may determine the number and positions of touch points touched by the digital pen 50 through the IR sensing element. For example, the touch sensing unit 270 may sense IR emitted from the plurality of IR light emitting elements included in the digital pen 50, so as to determine the number and positions of touch points of the digital pen 50.

The inputting unit 260 receives various user manipulations for controlling the display apparatus 200. For example, the inputting unit 260 may be implemented as various input apparatuses such as a remote controller, a voice inputting unit, a motion inputting unit, a pointing device, and the like, in order to receive the user manipulation.

The controlling unit 290 may control an overall operation of the display apparatus 200 by using a variety of programs stored in the storing unit 250.

As shown in FIG. 3, the controlling unit 290 includes a random access memory (RAM) 291, a read only memory (ROM) 292, a graphic processing unit 293, a main central processing unit (CPU) 294, first to n-th interfaces 295-1 to 295-n, and a bus 296. In this case, the RAM 291, the ROM 292, the graphic processing unit 293, the main CPU 294, the first to n-th interfaces 295-1 to 295-n, and the like may be connected to each other through the bus 296.

The ROM 292 stores a set of instructions for booting a system. When turn-on instruction is input to supply power, the main CPU 294 copies an operating system (O/S) stored in the storing unit 250 in the RAM 291 according to the instructions stored in the ROM 292 and executes the O/S so as to boot the system. When the booting is completed, the main CPU 294 copies a variety of application programs stored in the storing unit 250 in the RAM 291 and executes the application programs copied in the RAM 291 so as to perform a variety of operations.

The graphic processing unit 293 generates a screen including various objects such as a pointer, an icon, an image, a text, and the like using a calculating unit (not shown) and a rendering unit (not shown). The calculating unit calculates attribute values such as coordinate values, shape, sizes, colors, and the like in which the respective objects are to be displayed according to a layout of the screen using a control instruction received from the inputting unit. The rendering unit generates the screen of various layouts including the objects based on the attribute values calculated by the calculating unit. The screen generated by the rendering unit is displayed in a display region of the display unit 230.

The main CPU 294 accesses the storing unit 250 and performs the booting using the O/S stored in the storing unit 250. In addition, the main CPU 294 performs various operations using a variety of programs, contents, data, and the like stored in the storing unit 290.

The first to n-th interfaces 295-1 to 295-n are connected to the variety of components described above. One of the interfaces may be a network interface connected to an external device through a network.

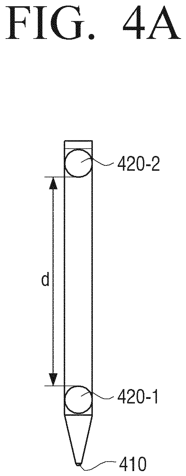

For example, when the digital pen 50 is sensed by the touch sensing unit 270, the controlling unit 290 may determine the number and positions of touch points emitted by the digital pen 50. In this example, the digital pen 50 may include three IR light emitting elements. Specifically, the digital pen 50 may include a first IR light emitting element 410 in a pen nib part, and a second IR light emitting element 420-1 and a third IR light emitting element 420-2 in both end parts of a pen body, as shown in FIG. 4A.

In addition, the controlling unit 290 determines the number of touch points sensed by the digital pen 50.

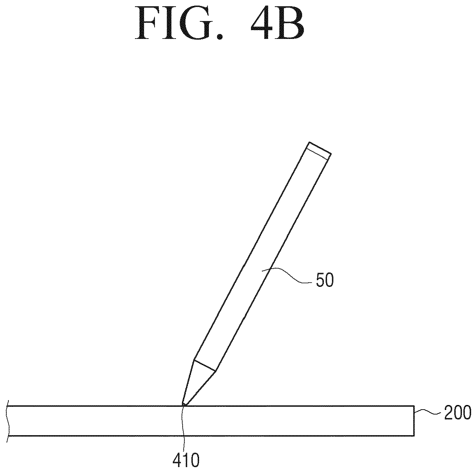

For example, when the digital pen 50 touches the display unit 230 in a state in which the digital pen 50 stands, as shown in FIG. 4B, the controlling unit 290 may determine that the number of touch points sensed by the first IR light emitting element 410 of the digital pen 50 is one and switch the mode of the display apparatus 200 to the coordinate calculating mode. In addition, controlling unit 290 may calculate a coordinate value of the touch point touched by the digital pen 50 in the coordinate calculating mode and control the display unit 230 to display the object (e.g., a cursor) at the calculated coordinate value. In addition, the controlling unit 290 may select a display item positioned at the calculated coordinate value. That is, the controlling unit 290 may perform a general touch function in the coordinate calculating mode.

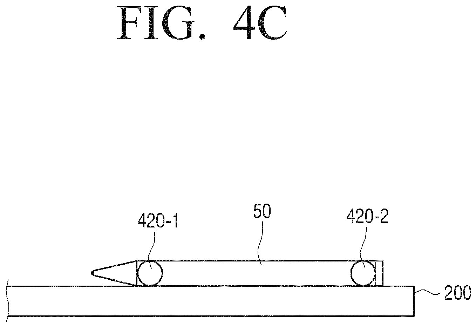

In addition, as shown in FIG. 4C, when the digital pen 50 touches the display unit 230 in a state in which the digital pen 50 lies on the display apparatus 200, the controlling unit 290 may determine that the number of touch points sensed by the second IR light emitting element 420-1 and the third IR light emitting element 420-2 of the digital pen 50 is two and determine a distance between the two touch points in order to distinguish the two touch points from operations touching two digital pens. Here, in a case in which the distance between the two touch points is equal to a distance d between the second IR light emitting element 420-1 and the third IR light emitting element 420-2, the controlling unit 290 may switch the mode of the display apparatus 200 to the touch gesture mode. Meanwhile, although the example discloses the body part of the digital pen 50 including the two IR light emitting elements has been described in FIGS. 4A to 4C, embodiments of the invention are not limited thereto. For example, the body part of the digital pen 50 may include three or more IR light emitting elements.

When the touch gesture using the digital pen 50 is sensed by the touch sensing unit 270 while the display apparatus 200 maintains the touch gesture mode, the controlling unit 290 controls the display apparatus 200 according to the sensed touch gesture.

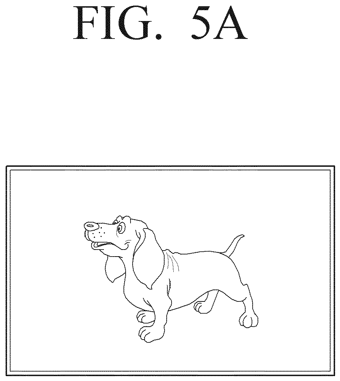

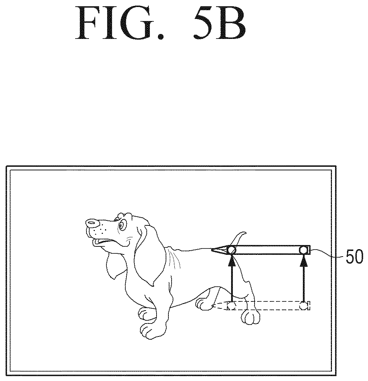

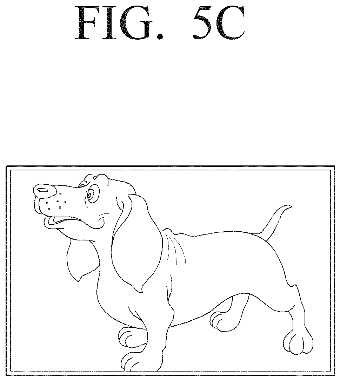

According to an exemplary embodiment, as shown in FIG. 5A, when the two touch points are sensed by the digital pen 50 after image contents are displayed, the controlling unit 290 switches the mode of the display apparatus 200 to the touch gesture mode. In addition, when a touch gesture in which the digital pen 50 is moved in an upward direction in a state in which the digital pen 50 is touched is sensed, as shown in FIG. 5B, the controlling unit 290 may control the display unit 230 to expand the displayed image, as shown in FIG. 5C.

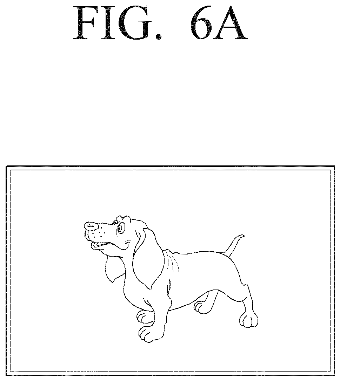

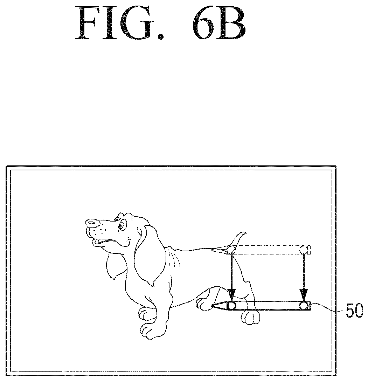

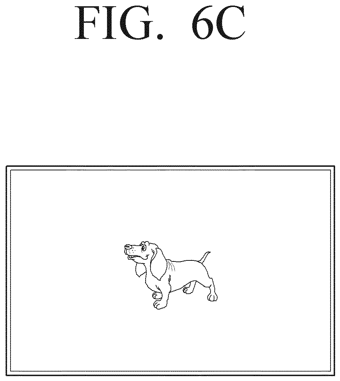

As another example, as shown in FIG. 6A, in the case in which the two touch points are sensed by the digital pen 50 after image contents are displayed, the controlling unit 290 switches the mode of the display apparatus 200 to the touch gesture mode. In addition, in a case in which a touch gesture in which the digital pen 50 is moved in a downward direction in a state in which the digital pen 50 is touched is sensed, as shown in FIG. 6B, the controlling unit 290 may control the display unit 230 to reduce the displayed image, as shown in FIG. 6C.

Meanwhile, The exemplary embodiments above disclose the image being expanded or reduced through the touch gesture which is moved in the upward or downward direction of the digital pen 50. However, embodiments of the invention are not limited thereto. For example, the image may be expanded or reduced even in a case in which the digital pen 50 is moved in other directions. For example, when a touch gesture in which the digital pen 50 is moved in a north-east direction is input, the controlling unit 290 may control the display unit 230 to expand and display the image, and when a touch gesture in which the digital pen 50 is moved in a south-west direction is input, the controlling unit 290 may control the display unit 230 to reduce and display the image.

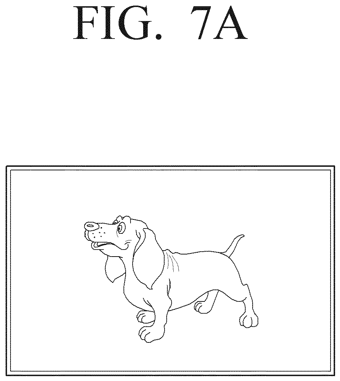

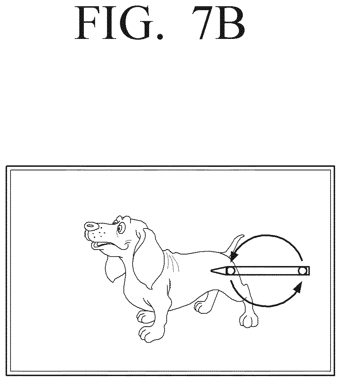

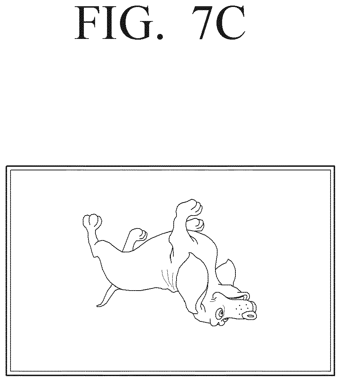

As another example, as shown in FIG. 7A, when the two touch points are sensed by the digital pen 50 after image contents are displayed, the controlling unit 290 switches the mode of the display apparatus 200 to the touch gesture mode. In addition, when a touch gesture in which the digital pen 50 is rotated at 180 degrees in a counterclockwise direction in a state in which the digital pen 50 is touched is sensed, as shown in FIG. 7B, the controlling unit 290 may control the display unit 230 to rotate the displayed image at 180 degrees to be displayed, as shown in FIG. 7C. In the exemplary embodiment, the controlling unit 290 may rotate the image according to at least one of a rotation direction, a rotation angle, and a rotation velocity of the touch gesture. For example, when the rotation direction of the touch gesture is the counterclockwise direction, the controlling unit 290 controls the display unit 230 to rotate the image in the counterclockwise direction, and when the rotation angle of the touch gesture is 90 degrees, the controlling unit 290 may control the display unit 230 to rotate the image by 90 degrees.

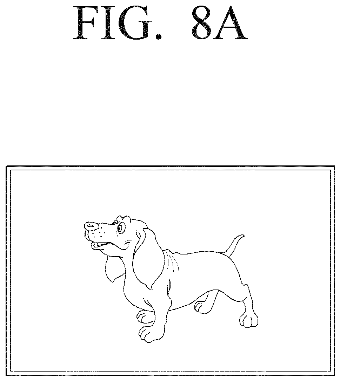

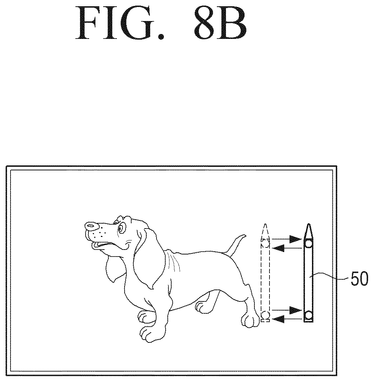

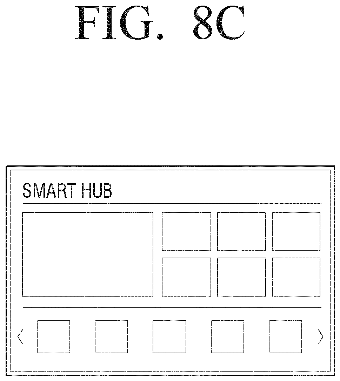

As another example, as shown in FIG. 8A, when the two touch points are sensed by the digital pen 50 after image contents are displayed, the controlling unit 290 switches the mode of the display apparatus 200 to the touch gesture mode. In addition, when a touch gesture in which the digital pen 50 is moved in a right direction and is then returned to an original position is sensed, as shown in FIG. 8B, the controlling unit 290 may execute specific application programs (e.g., a smart hub program, etc.), as shown in FIG. 8B. In addition, when a touch gesture in which the digital pen 50 is moved in the right direction and is then returned to the original position while the specific application program is executed is again sensed, as shown in FIG. 8C, the controlling unit 290 may terminate the specific application program and control the display unit 230 to display the image contents as shown in FIG. 8A.

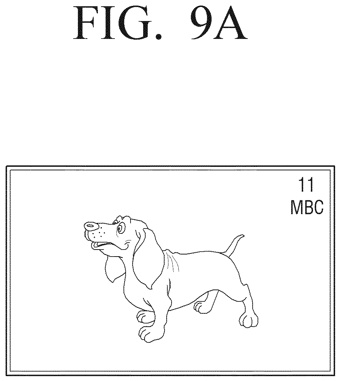

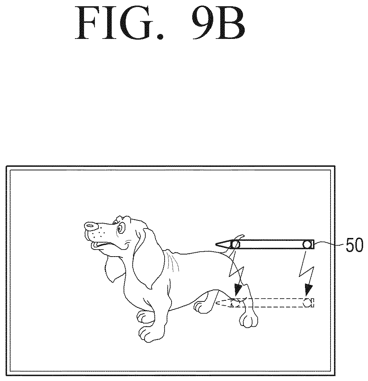

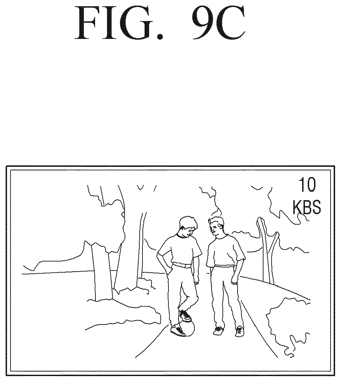

As another example, as shown in FIG. 9A, when the two touch points are sensed by the digital pen 50 after first broadcasting contents are displayed, the controlling unit 290 switches the mode of the display apparatus 200 to the touch gesture mode. In addition, when a touch gesture in which the digital pen 50 is moved in a downward direction in a zigzag shape is sensed, as shown in FIG. 9B, the controlling unit 290 may control the display unit 230 to display second broadcasting contents which are a previous channel of the first broadcasting contents, as shown in FIG. 9C. In addition, in a case in which a touch gesture in which the digital pen 50 is moved in an upward direction in a zigzag shape while the second broadcasting contents are displayed is sensed, the controlling unit 290 may control the display unit 230 to display the first broadcasting contents which are a next channel of the second broadcasting contents, as shown in FIG. 9A.

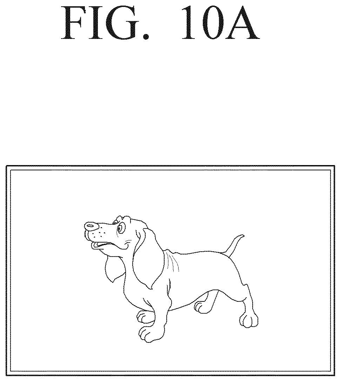

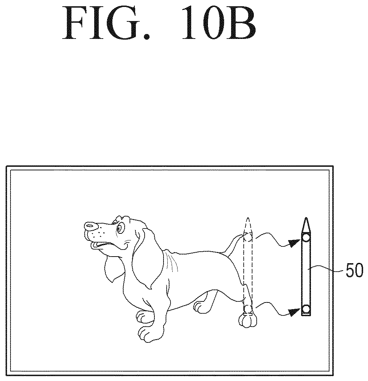

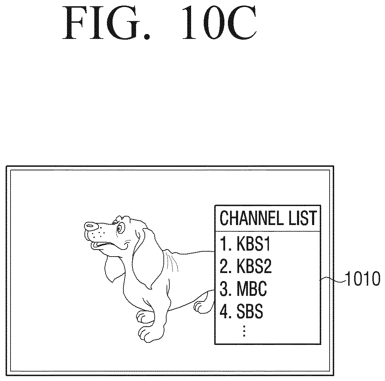

As another example, as shown in FIG. 10A, when the two touch points are sensed by the digital pen 50 after image contents are displayed, the controlling unit 290 switches the mode of the display apparatus 200 to the touch gesture mode. In addition, when a touch gesture in which the digital pen 50 is moved in a right direction in a wave shape is sensed, as shown in FIG. 10B, the controlling unit 290 may control the display unit 230 to display a channel list 1010, as shown in FIG. 10C.

Meanwhile, the correspondence between the touch gestures described above and the functions of the display apparatus 200 is merely an exemplary embodiment, and touch gestures different from the touch gestures described above and the functions of the display apparatus 200 may correspond to each other. For example, when a touch gesture in which the digital pen 50 is moved in the right direction in a state in which the digital pen 50 is touched is sensed, the controlling unit 290 may control the display unit 230 to expand the image contents, and when a touch gesture in which the digital pen 50 is moved in the left direction in a state in which the digital pen 50 is touched is sensed, the controlling unit 290 may control the display unit 230 to reduce the image contents.

In addition, it is apparent that the controlling unit 290 may perform various functions through the touch gestures using the digital pen 50, in addition to the exemplary embodiments described above. For example, the controlling unit 290 may perform various functions such as turning on/off of power of the display apparatus 200, an image deletion, and the like, through the touch gestures.

In addition, the case in which all images are expanded, reduced, or rotated by the touch gesture has been described in the exemplary embodiments described above. However, this is merely one example. For example, an image selected by the user among all images may be expanded, reduced, or rotated.

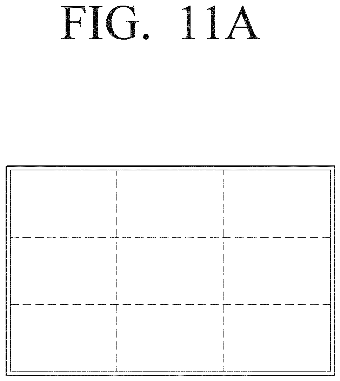

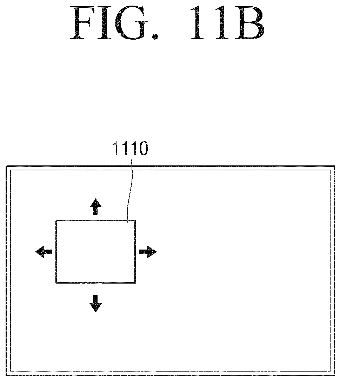

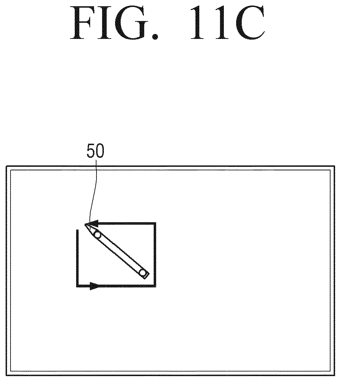

In addition, the controlling unit 290 may set a touch gesture region, not an arbitrary region of the display region 230, and may control the function of the display apparatus 200 using the touch gesture sensed in the set touch gesture region. In the exemplary embodiment, the touch gesture region may be set by various methods. For example, as shown in FIG. 11A, when a display screen is divided in a plurality of regions and one of the plurality of regions is selected, the selected region may be set as the touch gesture region. In addition, as shown in FIG. 11B, the controlling unit 290 may control the display unit 230 to display a touch gesture setting UI 1110, and may set the touch gesture region by adjusting a position and a size of the touch gesture setting UI 1110 according to a user instruction input through the inputting unit 280. In addition, as shown in FIG. 11C, the controlling unit 290 may set a region drawn by the digital pen 50 during a touch gesture region setting mode as the touch gesture region.

When the touch gesture region is set, the controlling unit 290 may control the display unit 230 to display the touch gesture region to be distinguished from other regions while the mode of the display apparatus 200 is the touch gesture mode. For example, the controlling unit 290 may control the display unit 230 to display at least one of color, brightness, and transparency of the touch gesture region to be different from those of other regions. As another example, the controlling unit 290 may control the display unit 230 to display the touch gesture region to be distinguished from other regions by displaying a line at an outer portion of the touch gesture region.

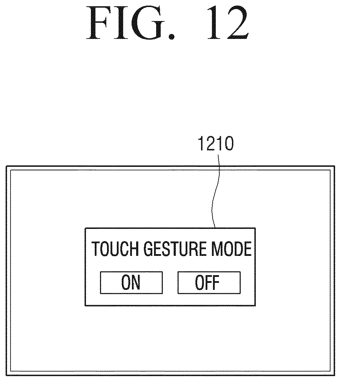

In addition, the controlling unit 290 may turn on/off the touch gesture mode according to a user manipulation. For example, as shown in FIG. 12, the controlling unit may turn on/off a function providing the touch gesture mode through a touch gesture mode operating UI 1210. When the touch gesture mode is turned off, the controlling unit 290 may calculate the coordinate value of the touch point regardless of the number of touch points, and may control the display unit 230 to display the object at the calculated coordinate value.

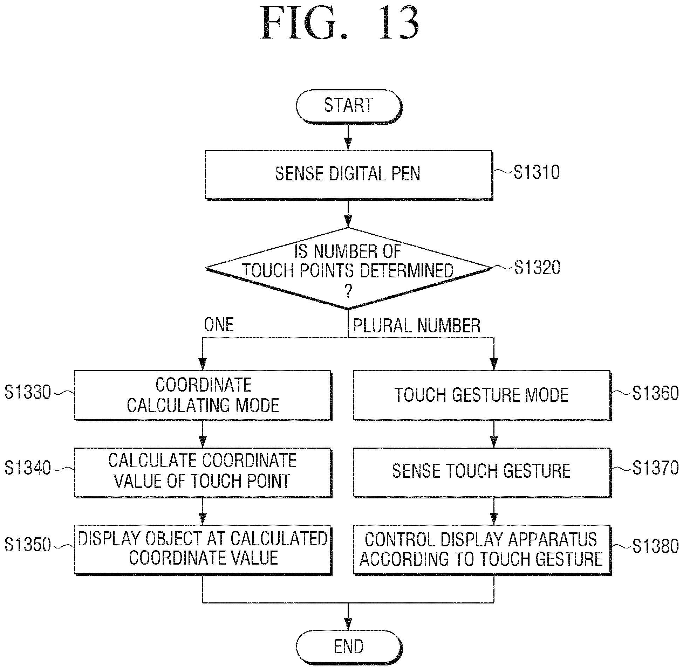

Hereinafter, a method for controlling the display apparatus 100 will be described with reference to FIG. 13.

The display apparatus 100 senses the digital pen 50 (S1310).

In the exemplary embodiment, the display apparatus 100 determines the number of touch points sensed by the digital pen 50 (S1320).

When the number of touch points sensed by the digital pen 50 is one, the display apparatus 100 switches a mode of the display apparatus 100 to a coordinate calculating mode (S1330). In addition, the display apparatus 100 calculates a coordinate value of the touch point (S1340) and displays an object at the calculated coordinate value (S1350).

When the number of touch points sensed by the digital pen 50 is the plural number (i.e., greater than one), the display apparatus 100 switches the mode of the display apparatus 100 to a touch gesture mode (S1360). In addition, the display apparatus 100 senses a touch gesture using the digital pen 50 (S1370) and the display apparatus 100 is controlled depending on the sensed touch gesture (S1380).

According to an exemplary embodiment as described above, the user may more intuitively and conveniently perform various functions of the display apparatus through various touch gestures using one digital pen.

Meanwhile, the case in which the display apparatus 200 detects the touch point of the digital pen 50 by sensing IR emitted by the digital pen 50 has been described in the examples described above. However, embodiments of the invention are not limited thereto, and the touch point of the digital pen 50 may be detected by using another method. For example, the display apparatus 200 may emit an IR signal for each coordinate, and the digital pen 50 may sense the IR signal so as to determine a coordinate value corresponding to the sensed signal and transmit information on the determined coordinate value to the display apparatus 200. As another example, the display apparatus 200 may include a specific pattern over the display unit 230, and the digital pen 50 may determine the coordinate value by photographing the specific pattern and transmit information on the determined coordinate value to the display apparatus 200.

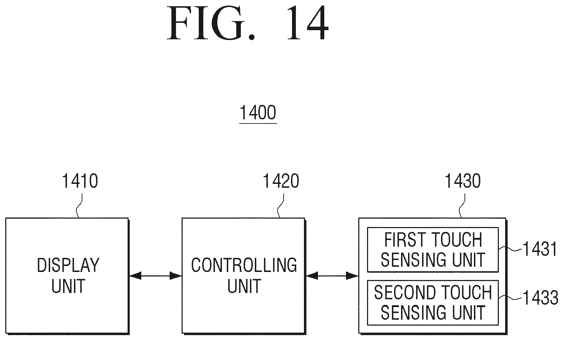

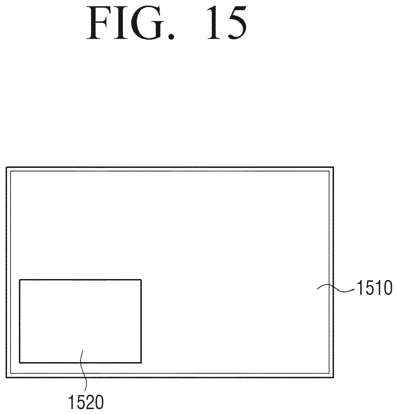

Meanwhile, according to the main exemplary embodiment, a method for sensing the touch point in the coordinate calculating mode and a method for sensing the touch point in the touch gesture mode are different from each other. A description thereof will be provided with reference to FIGS. 14 and 15. Because a description of a display unit 1410 and a controlling unit 1420 is the same as the description of the display unit 110 and the controlling unit 130 described in FIG. 1, an overlapped description will be omitted.

As shown in FIG. 14, a touch sensing unit 1430 of a display apparatus 1400 includes a first touch sensing unit 1431 and a second touch sensing unit 1433.

In the exemplary embodiment, the first touch sensing unit 1431 senses the touch gesture during the touch gesture mode. In the examplary embodiment, the first touch sensing unit 1431 may sense the touch gesture by a touch sensing method using electrostatic. In addition, the second touch sensing unit 1433 senses the touch point during the coordinate calculating mode. In this case, the second touch sensing unit 1433 may sense the touch point by a touch sensing method using IR. That is, the first touch sensing unit 1431 and the second touch sensing unit 1433 may sense the touch point by the different touch sensing methods.

In the exemplary embodiment, the first touch sensing unit 1431 may be disposed in a fixed region of the display screen. In the exemplary embodiment, the fixed region is operated as a touch gesture region 1520 which is distinguished from another region 1510, as shown in FIG. 15.

The method for controlling the display apparatus according to exemplary embodiments described above may be implemented in a program so as to be provided to the display apparatus or an input apparatus. For example, the program including the method for controlling the display apparatus may be stored and provided in a non-transitory computer readable medium.

The non-transitory computer readable medium does not mean a medium storing data for a short period such as a register, a cash, a memory, or the like, but means a machine-readable medium semi-permanently storing the data. Specifically, various applications or programs described above may be stored and provided in the non-transitory computer readable medium such as a compact disc (CD), a digital versatile disk (DVD), a hard disk, a Blu-lay disk, a universal serial bus (USB), a memory card, a read-only memory (ROM), or the like.

Hereinabove, while exemplary embodiments have been particularly shown and described above, it should be understood by the skilled artisans that variously changes made be made therein without departing from the scope of the inventive concept as defined by the following claims.

## Claims

1. A method for controlling a display apparatus, the method comprising:
sensing (S1310) one or more touch points touched by a digital pen on a display screen;
when the number of touch points touched by the digital pen is one, operating the display apparatus in a coordinate calculating mode (S1330), calculating a coordinate value of the touch point touched by the digital pen (S1340) and controlling the display apparatus according to the calculated coordinate value (S1350);
when a number of touch points simultaneously touched by the digital pen is a plural number, operating the display apparatus in a touch gesture mode (S1360) and displaying a touch gesture region for receiving the touch gesture using the digital pen, wherein the touch gesture region is a portion of the display screen displayed to be different from another region on the display screen; and
when the touch gesture using the digital pen is sensed in the touch gesture region during the touch gesture mode, controlling the display apparatus according to the sensed touch gesture (S1380);
wherein the touch gesture mode and the coordinate calculating mode sense the one or more touch points touched by the digital pen by using different touch sensing methods.

2. The method as claimed in claim 1, wherein the sensing the one or more touch points touched by the digital pen on the display screen comprises:
when the number of the touch points touched by the digital pen is two, calculating a distance between the two touch points; and
when the calculated distance between the two touch points is equal to a preset value, operating the display apparatus in the touch gesture mode.

3. The method as claimed in claim 1 or 2, further comprising displaying an image,
wherein in the controlling the display apparatus according to the sensed touch gesture, when the sensed touch gesture is moved in a preset direction, the image is expanded or reduced according to the moved direction.

4. The method as claimed in claim 3, wherein in the controlling of the display apparatus according to the sensed touch gesture, when the sensed touch gesture is rotated, the image is rotated according to a rotation direction and a rotation angle of the sensed touch gesture.

5. The method as claimed in any one of claims 1 to 2, wherein in the controlling the display apparatus according to the sensed touch gesture, when the sensed touch gesture is moved in a preset direction and is then returned to an original position, a specific program is executed, and when the sensed touch gesture is moved again in the preset direction and is then returned to the original position during the execution of the specific program, the specific program is terminated.

6. The method as claimed in any one of claims 1 to 5, wherein in the controlling of the display apparatus according to the sensed touch gesture, when the sensed touch gesture includes a preset pattern, performing a return to a previous screen.

7. The method as claimed in any preceding claim, wherein the touch gesture mode senses the one or more touch points touched by the digital pen by using an electrostatic touch sensing scheme, and
the coordinate calculating mode senses the one or more touch points touched by the digital pen by using an infrared touch sensing scheme.

8. A display apparatus comprising:
a display unit (110) configured to display an image;
a touch sensing unit (120, 1430, 1431, 1433) configured to sense one or more touch points touched by a digital pen on the display unit; and
a controlling unit (130) configured to operate the display apparatus in a coordinate calculating mode for calculating a coordinate value of the touch point touched by the digital pen when the number of touch points touched by the digital pen is one, control the display apparatus according to the calculated coordinate value in the coordinate calculating mode, operate the display apparatus in a touch gesture mode when a number of touch points simultaneously touched by the digital pen is a plural number, control the display unit to display a touch gesture region (1520) for receiving a touch gesture using the digital pen and control the display apparatus according to the touch gesture when the touch gesture using the digital pen is sensed in the touch sensing region by the touch sensing unit during the touch gesture mode,
wherein the touch gesture region is a portion of the display unit displayed to be different from another region on the display unit;
wherein the touch gesture mode and the coordinate calculating mode sense the one or more touch points touched by the digital pen by using different touch sensing methods (1431, 1433).

9. The display apparatus as claimed in claim 8, wherein the controlling unit is configured to calculate a distance between two touch points when the number of the touch points touched by the digital pen is two, and is configured to operate the display apparatus in the touch gesture mode when the calculated distance between the two touch points is equal to a preset value.

10. The display apparatus as claimed in claim 8 or 9, wherein when the sensed touch gesture is moved in a preset direction, the controlling unit is configured to control the display unit to expand or reduce the image according to the moved direction.

11. The display apparatus as claimed in claim 10, wherein when the sensed touch gesture is rotated, the controlling unit is configured to control the display unit to rotate the image according to a rotation direction and a rotation angle of the sensed touch gesture.

12. The display apparatus as claimed in any one of claims 8 or 9, wherein the controlling unit is configured to execute a specific program when the sensed touch gesture is moved in a preset direction and is then returned to an original position, and
wherein the controlling unit is configured to terminate the specific program when the sensed touch gesture is moved again in the preset direction and is then returned to the original position during the execution of the specific program.

## Patentansprüche

1. Verfahren zum Steuern einer Anzeigevorrichtung, wobei das Verfahren Folgendes beinhaltet:
Erfassen (S1310) von einem oder mehreren Berührungspunkten, die mit einem digitalen Stift auf einem Anzeigeschirm berührt werden;
Betreiben, wenn die Anzahl von mit dem digitalen Stift berührten Berührungspunkten eins ist, der Anzeigevorrichtung in einem Koordinatenberechnungsmodus (S1330), Berechnen eines Koordinatenwertes des mit dem digitalen Stift (S1340) berührten Berührungspunkts und Steuern der Anzeigevorrichtung gemäß dem berechneten Koordinatenwert (S1350);
Betreiben, wenn eine Anzahl von gleichzeitig mit dem digitalen Stift berührten Berührungspunkten eine Pluralzahl ist, der Anzeigevorrichtung in einem Berührungsgestenmodus (S1360) und Anzeigen einer Berührungsgestenregion zum Empfangen der Berührungsgeste mit dem digitalen Stift, wobei die Berührungsgestenregion ein Teil des Anzeigeschirms ist, der als sich von einer anderen Region auf dem Anzeigeschirm unterscheidend angezeigt wird; und
Steuern der Anzeigevorrichtung, wenn die Berührungsgeste mit dem digitalen Stift in der Berührungsgestenregion während des Berührungsgestenmodus erfasst wird, gemäß der erfassten Berührungsgeste (S1380);
wobei der Berührungsgestenmodus und der Koordinatenberechnungsmodus die ein oder mehreren mit dem digitalen Stift berührten Berührungspunkte mit unterschiedlichen Berührungserfassungsmethoden erfassen.

2. Verfahren nach Anspruch 1, wobei das Erfassen der mit dem digitalen Stift auf dem Anzeigeschirm berührten ein oder mehreren Berührungspunkte Folgendes beinhaltet:
Berechnen, wenn die Anzahl der mit dem digitalen Stift berührten Berührungspunkte zwei ist, einer Distanz zwischen den zwei Berührungspunkten; und
Betreiben der Anzeigevorrichtung im Berührungsgestenmodus, wenn die berechnete Distanz zwischen den zwei Berührungspunkten gleich einem voreingestellten Wert ist.

3. Verfahren nach Anspruch 1 oder 2, das ferner das Anzeigen eines Bildes beinhaltet, wobei beim Steuern der Anzeigevorrichtung gemäß der erfassten Berührungsgeste, wenn die erfasste Berührungsgeste in einer voreingestellten Richtung bewegt wird, das Bild gemäß der bewegten Richtung vergrößert oder verkleinert wird.

4. Verfahren nach Anspruch 3, wobei das Bild beim Steuern der Anzeigevorrichtung gemäß der erfassten Berührungsgeste, wenn die erfasste Berührungsgeste gedreht wird, gemäß einer Drehrichtung und einem Drehwinkel der erfassten Berührungsgeste gedreht wird.

5. Verfahren nach einem der Ansprüche 1 bis 2, wobei beim Steuern der Anzeigevorrichtung gemäß der erfassten Berührungsgeste, wenn die erfasste Berührungsgeste in einer voreingestellten Richtung bewegt und dann in ihre ursprüngliche Position zurückgebracht wird, ein bestimmtes Programm ausgeführt wird, und während der Ausführung des spezifischen Programms, wenn die erfasste Berührungsgeste wieder in der voreingestellten Richtung bewegt und dann in die ursprüngliche Position zurückgebracht wird, das bestimmte Programm beendet wird.

6. Verfahren nach einem der Ansprüche 1 bis 5, wobei beim Steuern der Anzeigevorrichtung gemäß der erfassten Berührungsgeste, wenn die erfasste Berührungsgeste ein voreingestelltes Muster beinhaltet, eine Rückkehr zu einem vorherigen Bildschirm erfolgt.

7. Verfahren nach einem vorherigen Anspruch, wobei der Berührungsgestenmodus die ein oder mehreren mit dem digitalen Stift berührten Berührungspunkte mittels eines elektrostatischen Berührungserfassungsschemas erfasst und der Koordinatenberechnungsmodus die mit dem digitalen Stift berührten ein oder mehreren Berührungspunkte mit einem Infrarot-Berührungserfassungsschema erfasst.

8. Anzeigevorrichtung, die Folgendes umfasst:
eine Anzeigeeinheit (110), konfiguriert zum Anzeigen eines Bildes;
eine Berührungserfassungseinheit (120, 1430, 1431, 1433), konfiguriert zum Erfassen von einem oder mehreren mit einem digitalen Stift auf der Anzeigeeinheit berührten Berührungspunkten; und
eine Steuereinheit (130), konfiguriert zum Betreiben der Anzeigevorrichtung in einem Koordinatenberechnungsmodus zum Berechnen eines Koordinatenwertes des mit dem digitalen Stift berührten Berührungspunktes, wenn die Anzahl von mit dem digitalen Stift berührten Berührungspunkten eins ist, Steuern der Anzeigevorrichtung gemäß dem berechneten Koordinatenwert im Koordinatenberechnungsmodus, Betreiben der Anzeigevorrichtung in einem Berührungsgestenmodus, wenn eine Anzahl von gleichzeitig mit dem digitalen Stift berührten Berührungspunkten eine Pluralzahl ist, Steuern der Anzeigeeinheit zum Anzeigen einer Berührungsgestenregion (1520) zum Empfangen einer Berührungsgeste mit dem digitalen Stift und Steuern der Anzeigevorrichtung gemäß der Berührungsgeste, wenn während des Berührungsgestenmodus die Berührungsgeste mit dem digitalen Stift in der Berührungserfassungsregion durch die Berührungserfassungseinheit erfasst wird,
wobei die Berührungsgestenregion ein Teil der Anzeigeeinheit ist, die als sich von einer anderen Region auf der Anzeigeeinheit unterscheidend angezeigt wird;
wobei der Berührungsgestenmodus und der Koordinatenberechnungsmodus die ein oder mehreren mit dem digitalen Stift berührten Berührungspunkte mit einem anderen Berührungserfassungsverfahren (1431, 1433) erfassen.

9. Anzeigevorrichtung nach Anspruch 8, wobei die Steuereinheit zum Berechnen einer Distanz zwischen zwei Berührungspunkten konfiguriert ist, wenn die Anzahl der mit dem digitalen Stift berührten Berührungspunkte zwei ist, und zum Betreiben der Anzeigevorrichtung im Berührungsgestenmodus konfiguriert ist, wenn die berechnete Distanz zwischen den zwei Berührungspunkten gleich einem voreingestellten Wert ist.

10. Anzeigevorrichtung nach Anspruch 8 oder 9, wobei, wenn die erfasste Berührungsgeste in einer voreingestellten Richtung bewegt wird, die Steuereinheit zum Steuern der Anzeigeeinheit konfiguriert ist, so dass sie das Bild gemäß der bewegten Richtung vergrößert oder verkleinert.

11. Anzeigevorrichtung nach Anspruch 10, wobei die Steuereinheit, wenn die erfasste Berührungsgeste gedreht wird, zum Steuern der Anzeigeeinheit zum Drehen des Bildes gemäß einer Drehrichtung und einem Drehwinkel der erfassten Berührungsgeste konfiguriert ist.

12. Anzeigevorrichtung nach Anspruch 8 oder 9, wobei die Steuereinheit zum Ausführen eines bestimmten Programms konfiguriert ist, wenn die erfasste Berührungsgeste in einer voreingestellten Richtung bewegt und dann in ihre ursprüngliche Position zurückgebracht wird, und
wobei die Steuereinheit zum Beenden des bestimmten Programms konfiguriert ist, wenn die erfasste Berührungsgeste während der Ausführung des spezifischen Programms wieder in der voreingestellten Richtung bewegt und dann in die ursprüngliche Position zurückgebracht wird.

## Revendications

1. Procédé de contrôle d'un appareil d'affichage, le procédé consistant à :
détecter (S1310) un ou plusieurs points tactiles touchés par un stylo numérique sur un écran d'affichage ;
quand le nombre de points tactiles touchés par le stylo numérique est égal à un, faire fonctionner l'appareil d'affichage dans un mode de calcul de coordonnées (S1330), calculer une valeur de coordonnée du point tactile touché par le stylo numérique (S1340), et contrôler l'appareil d'affichage selon la valeur de coordonnée calculée (S1350) ;
quand un nombre de points tactiles touchés simultanément par le stylo numérique est un nombre pluriel, faire fonctionner l'appareil d'affichage dans un mode de geste tactile (S1360) et afficher une région de geste tactile pour recevoir le geste tactile au moyen du stylo numérique, la région de geste tactile étant une partie de l'écran d'affichage affichée différemment d'une autre région sur l'écran d'affichage ; et
quand le geste tactile au moyen du stylo numérique est détecté dans la région de geste tactile pendant le mode de geste tactile, contrôler l'appareil d'affichage selon le geste tactile détecté (S1380) ;
le mode de geste tactile et le mode de calcul de coordonnée détectant le ou les points tactiles touchés par le stylo numérique au moyen de différents procédés de détection tactile.

2. Procédé selon la revendication 1, dans lequel la détection du ou des points tactiles touchés par le stylo numérique sur l'écran d'affichage consiste à :
quand le nombre de points tactiles touchés par le stylo numérique est égal à deux, calculer une distance entre les deux points tactiles ; et
quand la distance calculée entre les deux points tactiles est égale à une valeur prédéfinie, faire fonctionner l'appareil d'affichage dans le mode de geste tactile.

3. Procédé selon la revendication 1 ou 2, consistant en outre à afficher une image,
et dans lequel, lors du contrôle de l'appareil d'affichage selon le geste tactile détecté, quand le geste tactile détecté est un déplacement dans une direction prédéfinie, l'image est étendue ou réduite selon la direction de déplacement.

4. Procédé selon la revendication 3, dans lequel, lors du contrôle de l'appareil d'affichage selon le geste tactile détecté, quand le geste tactile détecté est une rotation, l'image est pivotée selon une direction de rotation et un angle de rotation du geste tactile détecté.

5. Procédé selon l'une quelconque des revendications 1 et 2, dans lequel, lors du contrôle de l'appareil d'affichage selon le geste tactile détecté,
quand le geste tactile détecté est un déplacement dans une direction prédéfinie puis un retour vers une position d'origine, un programme spécifique est exécuté, et
quand le geste tactile détecté est un nouveau déplacement dans la direction prédéfinie puis un retour dans la position d'origine pendant l'exécution du programme spécifique, le programme spécifique est fermé.

6. Procédé selon l'une quelconque des revendications 1 à 5, dans lequel, lors du contrôle de l'appareil d'affichage selon le geste tactile détecté, quand le geste tactile détecté inclut un patron prédéfini, réaliser un retour à un écran précédent.

7. Procédé selon l'une quelconque des revendications précédentes, dans lequel le mode de geste tactile détecte le ou les points tactiles touchés par le stylo numérique au moyen d'un schéma de détection tactile électrostatique, et
le mode de calcul de coordonnée détecte le ou les points tactiles touchés par le stylo numérique au moyen d'un schéma de détection tactile infrarouge.

8. Appareil d'affichage, comprenant :
une unité d'affichage (110), configurée pour afficher une image ;
une unité de détection tactile (120, 1430, 1431, 1433), configurée pour détecter un ou plusieurs points tactiles touchés par un stylo numérique sur l'unité d'affichage ; et
une unité de contrôle (130), configurée pour faire fonctionner l'appareil d'affichage dans un mode de calcul de coordonnées pour calculer une valeur de coordonnée du point tactile touché par le stylo numérique quand le nombre de points tactiles touchés par le stylo numérique est égal à un, contrôler l'appareil d'affichage selon la valeur de coordonnée calculée dans le mode de calcul de coordonnées, faire fonctionner l'appareil d'affichage dans un mode de geste tactile quand un nombre de points tactiles touchés simultanément par le stylo numérique est un nombre pluriel, contrôler l'unité d'affichage pour afficher une région de geste tactile (1520) pour recevoir un geste tactile au moyen du stylo numérique et contrôler l'appareil d'affichage selon le geste tactile quand le geste tactile au moyen du stylo numérique est détecté dans la région de détection tactile par l'unité de détection tactile pendant le mode de geste tactile,
la région de geste tactile étant une partie de l'unité d'affichage affichée différemment d'une autre région sur l'unité d'affichage ;
le mode de geste tactile et le mode de calcul de coordonnée détectant le ou les points tactiles touchés par le stylo numérique au moyen de différents procédés de détection tactile (1431, 1433).

9. Appareil d'affichage selon la revendication 8, dans lequel l'unité de contrôle est configurée pour calculer une distance entre deux points tactiles quand le nombre de points tactiles touchés par le stylo numérique est égal à deux, et est configurée pour faire fonctionner l'appareil d'affichage dans le mode de geste tactile quand la distance calculée entre les deux points tactiles est égale à une valeur prédéfinie.

10. Appareil d'affichage selon la revendication 8 ou 9, dans lequel, quand le geste tactile détecté est un déplacement dans une direction prédéfinie, l'unité de contrôle est configurée pour contrôler l'unité d'affichage pour étendre ou réduire l'image selon la direction de déplacement.

11. Appareil d'affichage selon la revendication 10, dans lequel, quand le geste tactile détecté est une rotation, l'unité de contrôle est configurée pour contrôler l'unité d'affichage pour faire pivoter l'image selon une direction de rotation et un angle de rotation du geste tactile détecté.

12. Appareil d'affichage selon l'une quelconque des revendications 8 et 9,
l'unité de contrôle étant configurée pour exécuter un programme spécifique quand le geste tactile détecté est un déplacement dans une direction prédéfinie puis un retour dans une position d'origine, et
l'unité de contrôle étant configurée pour fermer le programme spécifique quand le geste tactile détecté est un nouveau déplacement dans la direction prédéfinie puis un retour dans la position d'origine pendant l'exécution du programme spécifique.
